# EUROPEAN PATENT APPLICATION

(11) **EP 2 482 424 A2**
(43) Date of publication of application: **01.08.2012**
(21) Application number: 12150900.4
(22) Date of filing: 12.01.2012
(51) Int. Cl.: H02J 7/04, B60L 11/18

(54) **Battery charger for electric vehicle**

(30) Priority: 27.01.2011 CN 201120027779 U
(71) Applicant: Sunyen Co., Ltd., Taipei (TW)
(72) Inventor: Tu, Yu-Ta, Taipei (TW)
(74) Representative: Chaillot, Geneviève

(57) **Abstract**

An intelligent battery charger for electric vehicles is disclosed. The charger includes a power circuitry (1), a plurality of charging units (2) and a communication interface unit (4). The charging units may be used to electrically connect to one or more batteries (3) for charging. Signal output terminals of the batteries connect to the communication interface unit. Status signals of the batteries are integrated by the communication interface unit and then sent to the charging units and power circuitry to adjust chairing conditions. The charging units may be connected in parallel or in series for matching various types of batteries of electric vehicles.

## Description

### Background of the Invention

### 1. Technical Field

The invention relates to electric vehicles, particularly to battery charge techniques of electric vehicles.

### 2. Related Art

Due to the serious result of global warming and progressive exhaustion of petroleum resource of the earth, electric vehicles with low energy consuming and low pollution will certainly be the mainstream of transportation in the future. Electric vehicles are powered by batteries. Batteries must be repeated charged to maintain sufficient electricity. U.S patent No. 7,692,404 discloses a typical battery charger for electric vehicles (hereinafter "'404"). '404 employs a charging unit 360 to charge a plurality of batteries 301-305. However, it cannot be adjusted to match different arrangements of various electric vehicles. Currently, batteries used in all electric vehicles are plurally combined but they are different in quantity. And those batteries may also be connected in series, in parallel or in series-parallel. Therefore, a single charging unit cannot match different kinds of batteries by adjustment. For example, '404 needs many switches to change the connection between the charging unit and batteries. This is very complicated and inconvenient. Moreover, even if the connection is changed by many switches, the single charging unit still cannot satisfy all requirements of various electric vehicles. A charging station may need to be equipped with a couple of chargers for meeting various demands.

### Summary of the Invention

An object of the invention is to provide a battery charger for electric vehicles, which possesses plural charging units able to be adjusted and connected for matching different battery combinations of various electric vehicles. In other words, a single battery charger can satisfy different charging requirements of various electric vehicles. It is very economical and efficient.

To accomplish the above object, the battery charger of the invention includes a power circuitry, a plurality of charging units and a communication interface unit. The charging units may be used to electrically connect to one or more batteries for charging. Status signal output terminals of the batteries connect to the communication interface unit. Status signals of the batteries are integrated by the communication interface unit and then sent to the charging units and power circuitry to adjust chairing conditions. The charging units may be connected in parallel or in series for matching various types of batteries of electric vehicles.

It is therefore provided a battery charger for an electric vehicle, comprising:
a power circuitry having a plurality of output terminals for outputting a plurality of power sources;
a plurality of charging units, separately connecting to the plurality of output terminals and separately outputting charging power to batteries to be charged; and
a communication interface unit for receiving status signals from the batteries to be charged and sending control signals to the power circuitry and the charging units to adjust the charging power.

### Brief Description of the Drawings

FIG. 1 is a circuit diagram of the invention; and
FIG. 2 is a schematic view of an automatic charging station employing the invention with other devices.

### Detailed Description of the Invention

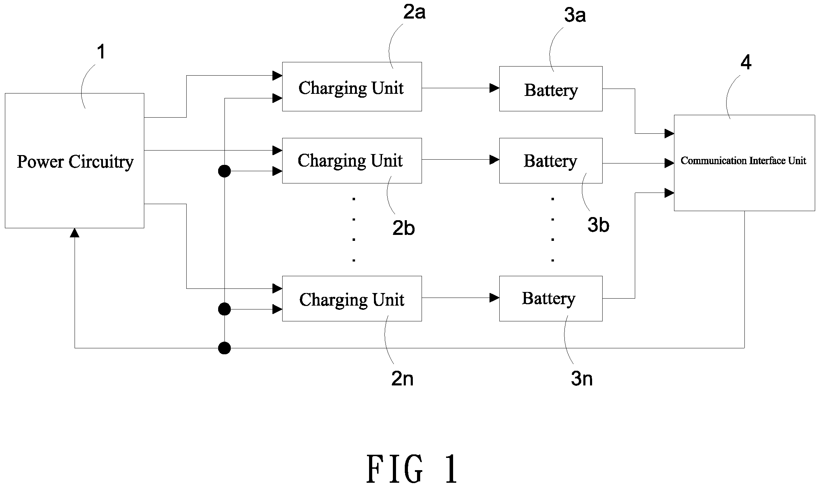

Please refer to FIG. 1, which is a block diagram of the system of the invention. The battery charger of the invention includes a power circuitry 1, a plurality of charging units 2a-2n and a communication interface unit 4. The power circuitry 1 converts external power into a power type required by the charging units 2a-2n, such as converting external AC power to low voltage DC power. The power circuitry 1 is provided with a plurality of output terminals separately connecting to the charging units 2a-2n for individually supplying power. In other words, each of the charging units 2a-2n possesses an independent power supply without interference any other charging units 2a-2n.

The charging units 2a-2n may be used to connect one or more batteries 3a-3n for charging. In the shown embodiment, the batteries 3a-3n are connected in parallel so that each battery 3a-3n connects to an exclusive one of the charging units 2a-2n. In fact, because the charging units 2a-2n are plural and have respective power supply, the charging units 2a-2n may be freely connected in series, in parallel or in series-parallel for matching various battery connections in series, in parallel or in series-parallel. In other words, the charging units 2a-2n may completely match various battery combinations. All charging requirements can be sufficiently satisfied.

The batteries 3a-3n have respective status signal output terminals for separately sending battery information out such as voltage and capacity. The status signal output terminals are connected to the communication interface unit 4. Status signals of the batteries 3a-3n are integrated by the communication interface unit 4 and then the communication interface unit 4 sends control signals to the charging units 2a-2n and the power circuitry 1 for adjusting charging conditions to the batteries 3a-3n. In other words, the batteries 3a-3n are charged with feedback to avoid overcharge and damage of battery.

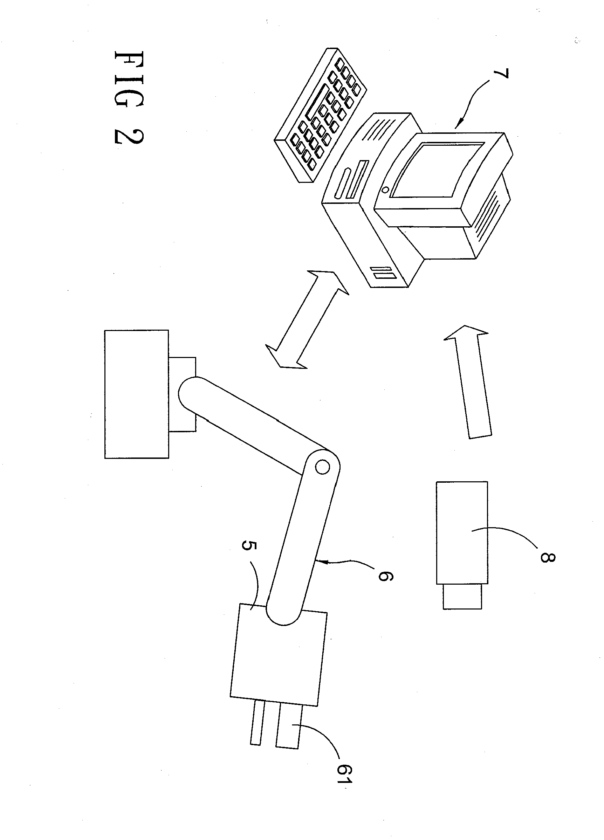

Please refer to FIG. 2, which is a schematic view of an automatic charging station employing the invention and other peripheral devices. The abovementioned charger 5 electrically connects to a robot hand 6. The robot hand 6 is provided with a charging plug 61 for connecting with a charging socket (not shown) on an electric vehicle. A camera 8 is disposed beside the robot hand 6. The camera 8 serves to shoot an image of the electric vehicle to be charged and sends the image to a computer host 7. The computer host 7 automatically recognizes where a charging socket of the electric vehicle is according to the image. Then the computer host 7 controls the robot hand 6 to move to the charging socket for completing the connection between the charging plug 61 and the charging socket. Finally, the electric vehicle can be charged by the battery charger of the invention.

Those skilled in the art will appreciate that numerous changes and modifications can be made to the preferred embodiment of the invention, and that such changes and modifications can be made without departing from the spirit of the invention.

## Claims

1. A battery charger for an electric vehicle, comprising:
a power circuitry (1) having a plurality of output terminals for outputting a plurality of power sources;
a plurality of charging units (2a-2n), separately connecting to the plurality of output terminals and separately outputting charging power to batteries (3a-3n) to be charged; and
a communication interface unit (4) for receiving status signals from the batteries (3a-3n) to be charged and sending control signals to the power circuitry (1) and the charging units (2a-2n) to adjust the charging power.

2. The battery charger of claim 1, wherein the charging units (2a-2n) can be connected in series, in parallel or in series-parallel.
